# EUROPEAN PATENT APPLICATION

(11) **EP 2 234 068 A1**
(43) Date of publication of application: **29.09.2010**
(21) Application number: 08869278.5
(22) Date of filing: 26.12.2008
(51) Int. Cl.: G06T 15/60

(54) **IMAGE PROCESSING DEVICE, IMAGE PROCESSING METHOD, INFORMATION RECORDING MEDIUM, AND PROGRAM**

(30) Priority: 11.01.2008 JP 2008004260
(71) Applicant: Konami Digital Entertainment Co., Ltd., Tokyo 107-8324 (JP)
(72) Inventor: ISHIHARA, Akihiro, Tokyo 107-8324 (JP)
(74) Representative: Epping - Hermann - Fischer
(86) International application number: PCT/JP2008/073835
(87) International publication number: WO 2009/087936

(57) **Abstract**

A memory unit (201) stores a shape, a position and a direction of an object in a virtual space and those of a planar body close to the object, and covering polygons arranged so as to cover the object. Each covering polygon has transparency information which expresses a shadow of the object to be covered. The transparency information becomes opaque at a center thereof, and gradually becomes transparent toward the exterior. A selecting unit (202) selects, among the covering polygons corresponding to the object, a covering polygon satisfying a precondition, such as contacting with the planar body, as a projecting polygon. A generating unit (203) projects the virtual space onto a two-dimensional planar surface in the order of the planar body, the projecting polygon and the object to display a shadow of the object on the planar body.

## Description

### Technical Field

The present invention relates to an image processing device suitable for simply displaying a figure like a shadow generated when an object in a virtual space comes closer to a planar body, e.g., a floor or a wall, in a game or the like, an image processing method, an information recording medium, and a program to be realized on a computer.

### Background Art

In the field of three-dimensional computer graphics where images used for games are generated, it is known that a shadow of an object in a virtual space is projected onto a planar body representing a surface, such as a floor, a desk, or a wall in order to improve the reality of a game. For example, Patent Literature 1 discloses a technology of changing the transparency of a shadow in accordance with changes in a position of a light source, a position of the object and a posture thereof and the like and of laying a more realistic shadow. Moreover, there is a demand to apply this scheme to a technology of projecting a figure generated by a light-emitting object onto a floor in addition to a shadow.
Patent Literature 1: Unexamined Japanese Patent Application KOKAI Publication No. 2007-195747

### Disclosure of Invention

### Problem to be solved by the Invention

When an object or the like which moves at a high speed is displayed in real time, it is desirable that a process of generating a shadow should be performed at a high speed. However, there are times when calculations that are necessary for displaying a shadow are limited by hardware performance, and there are problems with the shadow generating process in that the creation of a shadow has negative effects on the whole image process.

The present invention intends to overcome the foregoing problem, and it is an object of the present invention to provide an image processing device suitable for simply displaying a figure like a shadow generated when an object in a virtual space comes closer to a floor, a wall, or the like in a gaming device or the like, an image processing method, an information recording medium, and a program to be realized on a computer.

### Means for solving the problem

To attain the foregoing object, an image processing device according to a first aspect of the present invention comprises a memory unit, a selecting unit and a generating unit, and generates an image representing an object and a planar body arranged in a virtual space, and a figure of the object projected onto the planar body.

First, the memory unit stores a position of a viewpoint arranged in the virtual space and a direction of a visual line, a shape, a position and a direction of the object and the planar body arranged in the virtual space, and respective shapes, positions and directions of multiple covering polygons are arranged so as to cover the object.

The viewpoint is a virtual camera viewing a virtual three-dimensional space, and the visual line is a direction in which the virtual camera is directed. A two-dimensional image of the virtual space is generated as the virtual space as viewed from the viewpoint in the direction of the visual line is projected onto a two-dimensional planar surface (a projection plane). The planar body is another object different from the object, and a wide surface, e.g., a ground (a floor) or a wall is assumed as such a planar body. A shape of each object and that of each planar body are defined (modeled) by a surface that is a combination or the like of, for example, microscopic polygons called polygons.

The covering polygon expresses a shadow of the object projected onto a planar body close to the object and a figure of the object mirrored on such planar body (hereinafter, "a shadow" will be mainly exemplified). Multiple covering polygons configure a polyhedron and are arranged so as to cover the object. In the real world, a shadow is clearly projected onto substances present near an object. Consequently, in the image processing device of the present invention, when a planar body contacts the covering polygon, or when a planar body is included in the covering polygon, it is presumed that there is a planar body close to the object present. As a covering polygon satisfying a precondition, such as being in contact with the planar body, is selected as a projecting polygon and is displayed, the shadow of the object is generated on the planar body.

Note that a predetermined distance is maintained between an object and a covering polygon covering the object, and the way a shadow is expressed differs depending on such a distance. That is, when it is desirable to project a shadow also onto a planar body far from the object, it is appropriate if a longer distance between the object and the covering polygon is taken. Conversely, when it is desirable to project a shadow only onto a planar body close to the object, it is appropriate if a smaller distance between the object and the covering polygon is taken.

The selecting unit selects a covering polygon satisfying a precondition for display as a projecting polygon among the multiple covering polygons. That is, as explained above, the selecting unit selects a covering polygon satisfying a precondition, such as, for example, a condition that there must be contact with the planar body, as a projecting polygon.

The generating unit generates an image of the virtual space as viewed from the viewpoint in the direction of the visual line based on the shape, the position and the direction of the object and the shape, the position and the direction of the planar body, the position of the viewpoint and the direction of the visual line, and a shape, a position and a direction of the projecting polygon. That is, the generating unit displays the projecting polygon selected by the selecting unit and generates a shadow of the object on the planar body. Typically, the generating unit displays the object through Z-buffering or the like. That is, for example, the generating unit displays the object (and the planar body and the covering polygon) in such a manner as to paint a pixel with a color of texture information (or transparency information) corresponding to a polygon closest to the viewpoint pixel by pixel configuring image data to be displayed, and executes a hidden-plane process.

Moreover, the generating unit may display the planar body as viewed from the viewpoint in the direction of the visual line based on the shape, the position and the direction of the object; and, the shape, the position and direction of the planar body, the position of the viewpoint and the direction of the visual line; and, the shape, the position and the direction of the projecting polygon may display the projecting polygon as viewed from the viewpoint in the direction of the visual line, and may display the object as viewed from the viewpoint in the direction of the visual line, thereby generating an image of the virtual space as viewed from the viewpoint in the direction of the visual line.

Because a collision determination process is performed on the object, the object and the planar body never overlap each other. That is, a situation in which the object "sinks into" the planar body never happens. However, because such collision determination process is not performed on the covering polygon, there may be a case in which the respective positions of the covering polygon and the planar body overlap. That is, there may be a case in which the projecting polygon is arranged in a "sinking" condition into a surface of the planar body as viewed from a direction of the viewpoint. However, if the covering polygon sinks into the planar body, the projecting polygon will not be displayed as being hidden by the planar body. In order to avoid such problem, the generating unit may display the planar body, the projecting polygon and the object in this order as viewed from the direction of the viewpoint to generate a two-dimensional image of the virtual space.

Moreover, when a covering polygon and the planar body contact each other, the covering polygon satisfies the precondition for display. That is, the condition that a covering polygon be displayed as a projecting polygon contacting a polygon configuring the shape of the planar body. It should be noted that, whether such a covering polygon and the planar body are in contact with each other is determined by whether such a polygon intersects with the planar body.

Furthermore, when a covering polygon is included within the planar body, such a covering polygon satisfies the precondition for display. That is, a covering polygon included in the interior of the planar body is also displayed as a projecting polygon.

Moreover, only a covering polygon having the smallest inclination relative to the surface of the planer body may satisfy the precondition for display among the multiple covering polygons, each of which is in contact with the planar body, or is arranged so as to be included in the planar body. That is, the selecting unit determines that a covering polygon most parallel to the surface of the planar body affects the surface of the planar body at a maximum among covering polygons contacting the polygon configuring the surface of the planar body, or covering polygons included in the interior of the planar body, and adopts such covering polygon as a projecting polygon. Accordingly, a shadow-like expression is attained without performing a complex calculation with a position of a light source being taken into consideration.

Moreover, the memory unit may also store a position of the light source, and the generating unit may move the projecting polygon by only a predetermined distance so that the projecting polygon moves away from the light source, and may display the object under a condition that the object and the planar body are illuminated by the light source. That is, as the projecting polygon is moved in accordance with a position of the light source, an effect depending on the position of the light source is reflected on the projecting polygon.

Furthermore, when there is a line of intersection that a planar surface including the projecting polygon intersects with a planar surface including the surface of the planar body, the generating unit may rotate the projecting polygon around the line of intersection, and when there is no line of intersection, the generating unit may move the projecting polygon along respective normal lines of both planar surfaces and may arrange the projecting polygon on the surface of the planar body, thereby displaying the projecting polygon.

In this case, as the projecting polygon is moved along the surface of the planar body, even if the generating unit does not display the planar body, the projecting polygon and the object in this order as explained above, the projecting polygon is displayed without being hidden by the planar body.

Moreover, when such a covering polygon is closer to the viewpoint than the object, such a covering polygon does not satisfy the precondition for display regardless of an arrangement relative to the planar body. That is, in the image processing device of the present invention, even if a covering polygon contacts the planar body, or is included in the planar body, a covering polygon present between the viewpoint and the object is not selected as a projecting polygon. Consequently, the object is displayed in such a way that the shadow is always displayed behind (at the rear of) the object as viewed from the viewpoint.

An image processing method according to another aspect of the present invention is executed by an image processing device comprising a memory unit, a selecting unit and a generating unit, and generates an image representing an object and a planar body arranged in a virtual space, and a figure of the object projected onto the planar body.

The memory unit stores a position of a viewpoint arranged in the virtual space and a direction of a visual line, a shape, a position and a direction of the object and the planar body arranged in the virtual space and respective shapes, positions and directions of multiple covering polygons arranged so as to cover the object.

In the image processing method, in a selecting step, the selecting unit selects a covering polygon satisfying a precondition for display as a projecting polygon among the multiple covering polygons.

In a generating step, the generating unit generates an image of the virtual space viewed from the viewpoint in the direction of the visual line based on the shape, the position and the direction of the object and the shape, the position and the direction of the planar body, the position of the viewpoint and the direction of the visual line, and a shape, a position and a direction of the projecting polygon.

Moreover, when a covering polygon and the planar body are arranged so as to contact each other, the covering polygon satisfies the precondition for display.

A program according to the other aspect of the present invention configures a computer so that the computer functions as the above-explained image processing device.

Moreover, the program of the invention can be recorded in a computer-readable information recording medium, such as a compact disk, a flexible disk, a hard disk, a magneto-optical disk, a digital video disk, a magnetic tape, or a semiconductor memory. The program can be distributed and sold over a computer communication network independently from a computer which runs the program. Furthermore, the information recording medium can be distributed and sold independently from that computer.

### Effect of the Invention

The present invention can provide an image processing device suitable for simply displaying a figure like a shadow generated when an object in a virtual space comes closer to a floor, a wall or the like in a game or the like, an image processing method, an information recording medium, and a program to be realized on a computer.

### Brief Description of Drawings

FIG. 1 is an exemplary diagram showing a general configuration of a typical gaming device which realizes an image processing device or the like according to an embodiment of the present invention;
FIG. 2 is a diagram showing a general configuration of the image processing device according to the embodiment;
FIG. 3A is a diagram showing the way an object and a covering polygon corresponding to the object are viewed from an inclined direction;
FIG. 3B is a diagram showing the way the object and the covering polygon corresponding to the object are viewed from the above;
FIG. 3C is a diagram showing the way the object and the covering polygon corresponding to the object are from a side;
FIG. 3D is a diagram showing an example of transparency information which is stored in association with a covering polygon;
FIG. 4 is a flowchart for explaining an operation of the image processing device according to the embodiment;
FIG. 5A is a flowchart for explaining a selecting process of a projecting polygon according to the embodiment;
FIG. 5B is a flowchart for explaining a displaying process of an object according to the embodiment;
FIG. 6A is a diagram for explaining the selecting process of a projecting polygon according to the embodiment;
FIG. 6B is a diagram for explaining the selecting process of a projecting polygon according to the embodiment;
FIG. 6C is a diagram for explaining the selecting process of a projecting polygon according to the embodiment;
FIG. 6D is a diagram for explaining the selecting process of a projecting polygon according to the embodiment;
FIG. 7 is a diagram showing an example of a displayed projecting polygon;
FIG. 8 is a flowchart for explaining an operation of an image processing device according to another embodiment;
FIG. 9A is a diagram showing the way a projecting polygon is moved along a planar body;
FIG. 9B is a diagram showing the way the projecting polygon is moved along the planar body;
FIG. 9C is a diagram showing the way the projecting polygon is moved along the planar body;
FIG. 9D is a diagram showing the way the projecting polygon is moved along the planar body;
FIG. 10A is a diagram showing the way a projecting polygon is moved in accordance with a position of a light source;
FIG. 10B is a diagram showing the way the projecting polygon is moved in accordance with a position of the light source; and
FIG. 10C is a diagram showing the way the projecting polygon is moved in accordance with a position of the light source.

### Description of reference numerals

- 100: Gaming device
- 101: CPU
- 102: ROM
- 103: RAM
- 104: Interface
- 105: Controller
- 106: External memory
- 107: Image processing unit
- 108: DVD-ROM drive
- 109: NIC
- 110: Sound processing unit
- 200: Image processing device
- 201: Memory unit
- 202: Selecting unit
- 203: Generating unit

### Best Mode for Carrying Out the Invention

### <First Embodiment>

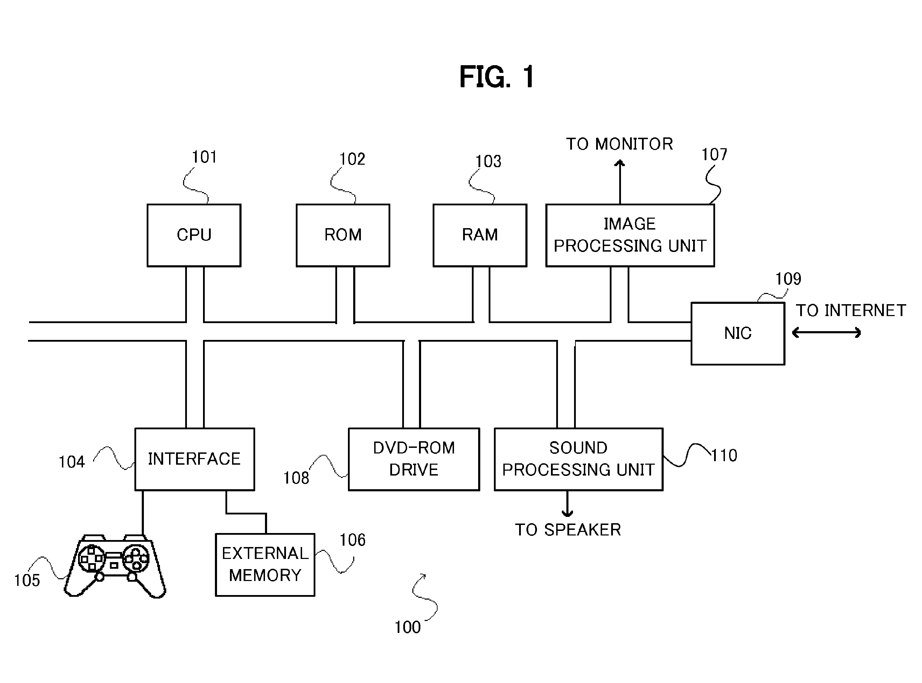

FIG.1 is an exemplary diagram showing a general configuration of a typical gaming device which realizes an image processing device according to an embodiment of the present invention. An explanation will be given with reference to this diagram.

A gaming device 100 comprises a CPU (Central Processing Unit) 101, a ROM (Read Only Memory) 102, a RAM (Random Access Memory) 103, an interface 104, a controller 105, an external memory 106, an image processing unit 107, a DVD (Digital Versatile Disk)-ROM drive 108, an NIC (Network Interface Card) 109, and a sound processing unit 110.

As a DVD-ROM which stores a program and data for games is loaded in the DVD-ROM drive 108 and the gaming device 100 is powered on, the program is run and the image processing device of the present embodiment is realized.

The CPU 101 controls the overall operation of the gaming device 100, and is connected to each structural element to exchange control signals and data.

The ROM 102 stores an IPL (Initial Program Loader) which is executed immediately after the gaming device 100 is powered on. As the CPU 101 executes the IPL, the program recorded in the DVD-ROM is read out in the RAM 103, thereby causing the CPU 101 to run the program.
Moreover, the ROM 102 records an operating system program and various data necessary for controlling the overall operation of the gaming device 100.

The RAM 103 is for temporarily storing data and programs, and retains the program and data which are read out from the DVD-ROM, and other data and the like necessary for the progress of a game and a chat communication.

The controller 105 which is connected through the interface 104 receives an operation input given when a user plays a game.

The external memory 106 which is detachably connected through the interface 104 stores, for example, data of the log of a chat communication in a rewritable manner. The user can store these pieces of data in the external memory 106 by giving an instruction through the controller 105 as needed.

The DVD-ROM loaded in the DVD-ROM drive 108 records the program to realize the game as explained above, and image data and sound data both accompanying the game. Under the control of the CPU 101, the DVD-ROM drive 108 performs a read-out process on the DVD-ROM loaded therein, and reads out necessary program and data. The read-out data is temporarily stored in the RAM 103 or the like.

After data which is read out from the DVD-ROM is processed by the CPU 101 or an image computation processor (not illustrated) possessed by the image processing unit 107, the image processing unit 107 records such processed data in a frame memory (not illustrated). Image information recorded in the frame memory is converted into a video signal at a predetermined synchronization timing, and is output to a monitor (not illustrated) connected to the image processing unit 107. This enables various image display.

The image computation processor can perform overlay calculation of two-dimensional images, transparency calculation like α blending, and various saturation calculations at a high speed.

Moreover, the image computation processor can perform, at a high speed, rendering of polygon information arranged in a virtual three-dimensional space and affixed with various texture information by Z buffering to obtain a rendered image of a polygon arranged in the virtual three-dimensional space as viewed panoramically from a predetermined view position toward a predetermined direction of a visual line

Furthermore, the CPU 101 and the image computation processor work together to display letter strings as a two-dimensional image in the frame memory, or on a surface of a polygon in accordance with font information which defines the shape of a letter. Although the font information is recorded in the ROM 102, exclusive font information recorded in the DVD-ROM can be also used.

The NIC 109 connects the gaming device 100 to a computer communication network (not illustrated) like the Internet. The NIC 109 comprises, for example, a 10 BASE-T/100 BASE-T compatible product which is used for establishing a LAN (Local Area Network), an analog modem, an ISDN (Integrated Services Digital Network) modem, and an ADSL (Asymmetric Digital Subscriber Line) modem which are for connecting to the Internet via a telephone line, or a cable modem for connecting to the Internet via a cable television line, and an interface (not illustrated) which intermediates between any of those and the CPU 101.

Current date and time information can be acquired by connecting through the NIC 109 to an SNTP server in the Internet and acquiring the information therefrom. Moreover, a server device for various network games may be configured and set to function as the SNTP server.

The sound processing unit 110 converts sound data which is read out from the DVD-ROM into an analog sound signal, and outputs it from a speaker (not illustrated) connected thereto. Moreover, under the control of the CPU 101, the sound processing unit 110 generates sound effects and music data to be generated during the progress of the game, and outputs sound corresponding to the generated such data from the speaker.

Furthermore, the gaming device 100 may use a large-capacity external memory device like a hard disk drive, and configure it to serve the same function as the ROM 102, the RAM 103, the DVD-ROM loaded in the DVD-ROM drive 108 and the like.

Note that an image processing device 200 according to the present embodiment is realized on the gaming device 100 or a portable gaming device, but can be realized on a general computer. A general computer comprises, like the gaming device 100, a CPU, a RAM, a ROM, a DVD-ROM drive and an NIC, also comprises an image processing unit which has a simpler function than that of the gaming device 100, further comprises a hard disk drive as an external memory device, and can use a flexible disk, a magneto-optical disk, a magnetic tape and the like. Moreover, a keyboard or a mouse is used as an input device instead of the controller. When a program is installed and is run, the computer can function as the image processing device.

An explanation will be given of the image processing device through the gaming device 100 shown in FIG. 1 unless otherwise noted. The image processing device can be appropriately replaced with structural elements of a general computer as needed, and it should be understood that such embodiments are included within the scope of the present invention.

### <General Configuration of Image Processing Device>

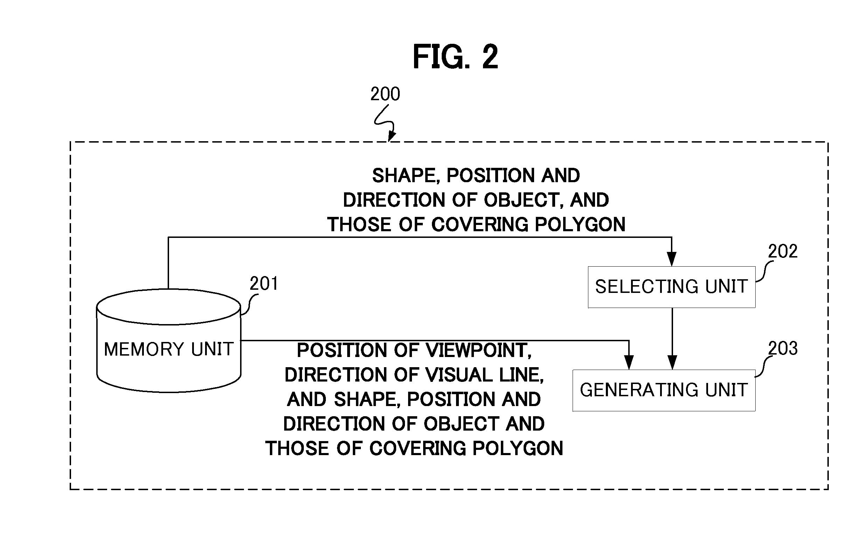

FIG. 2 is an exemplary diagram showing a general configuration of the image processing device 200 according to the present embodiment. The image processing device 200 is for projecting a shadow of an object onto a planar body, and as shown in FIG. 2, comprises a memory unit 201, a selecting unit 202, a generating unit 203 and the like. An explanation will be given of each structural element of the image processing device 200 with reference to this diagram.

The memory unit 201 stores various information for representing the interior of a virtual three-dimensional space.
First, the memory unit 201 stores shape information on each element (an object, may be called a model in some cases) in the virtual three-dimensional space. Each object is represented as a surface (a face) defined by a combination of microscopic polygons (e.g., a triangle or a rectangle) having shapes called polygons.

Moreover, the memory unit 201 stores a shape, a position, and a direction of each object in the virtual space. For example, the memory unit 201 stores a global coordinate system (a world coordinate system) which expresses the whole virtual space, and a local coordinate system which is fixed for each object. Typically, a representative point (e.g., a center of gravity) of an object is an origin of a local coordinate system, and a surface shape (i.e., a shape of a polygon configuring the object and a position where the polygon is arranged) of the object is defined based on the local coordinate system. Conversely, a position of each object is set by, for example, defining a representative point of an object based on a global coordinate system. A direction of the object is defined by, for example, a rotation amount of a directional vector running from a representative point of the object toward a front direction of the object.

Note that positional information may be defined using an orthogonal coordinate system, or may be expressed by symbols (r, θ, and φ) using a polar coordinate system with one moving radius and two deflection angles.

Likewise, the memory unit 201 stores information on a shape, a position, a direction and the like of a planar body like a floor onto which a shadow of an object is projected.

Moreover, the memory unit 201 stores a shape of a covering polygon arranged so as to cover an object, a direction and a position thereof. A covering polygon is fixed relative to a local coordinate system of an object covered by the covering polygon to define the shape, position and direction thereof. Consequently, when the object moves, the covering polygon also moves along with the object.

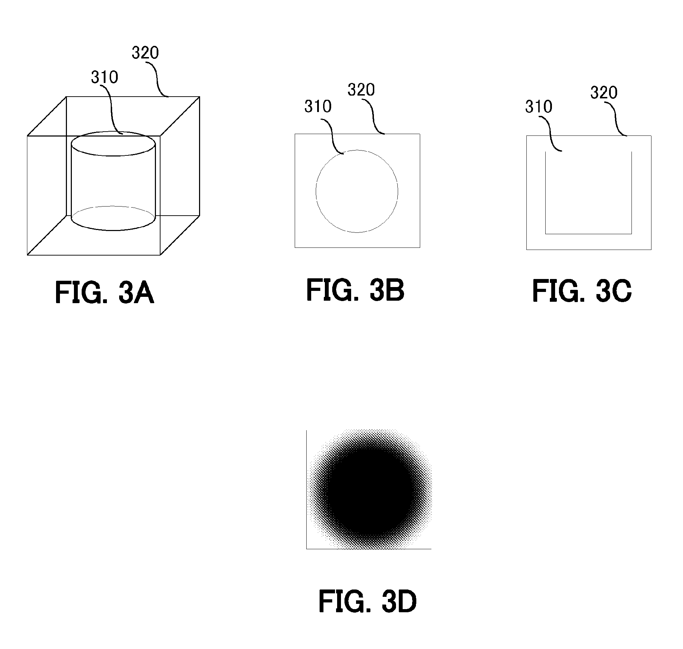

FIG. 3 shows an example case in which a plurality of covering polygons 320 are arranged in a cuboid shape so as to cover a cylindrical object 310. FIG. 3A is a perspective view showing the object 310 and the plurality of covering polygons 320 corresponding to that object as viewed from an obliquely upward direction, FIG. 3B is a diagram as viewed from the above, and FIG. 3C is a diagram as viewed from a side. In the foregoing example, although six square covering polygons 320 are arranged perpendicular to one another, the shape of the covering polygon and the number thereof are not limited to such example, and multiple covering polygons having other polygonal shapes by what corresponds to a number required to cover an object may be used. However, it is typical that a polyhedron formed of covering polygons is a convex polyhedron. It is desirable that the covering polygons should be arranged so as to be spaced apart from the corresponding object by a predetermined distance as shown in FIG. 3, but may be arranged so as to adjoin the object.

Note that regarding a viewpoint and a projection plane, a position and a direction are defined using a global coordinate system and a local coordinate system as explained above. A position of the projection plane and a direction thereof are updated when a position of a virtual camera and a direction thereof are changed through an operation by a user or the like.

Moreover, the memory unit 201 stores image data, called a texture, affixed on a surface of each object, a position of a light source which illuminates the virtual space, and the like. The texture of an object can be expressed by affixing texture information on a surface shape of the object.

The memory unit 201 further stores transparency information for expressing a shadow in association with each covering polygon. Transparency information is defined in such a way that a covering polygon becomes most opaque (i.e., light is not transmissive) at a center thereof, and gradually becomes transparent (i.e., light is transmissive) as a distance from the center increases. Note that it is typical that a dark color like black is specified for an opaque part so as to express a shadow. FIG. 3D shows an example of transparency information possessed by a covering polygon. A black part represents an opaque part, and a white part represents a transparent part. Although a square is clearly displayed around the transparency information in order to clarify the shape of the covering polygon, the square is not displayed in practice. Moreover, the transparency information has the opaque part at the center in a circular shape, but shapes other than the circular shape may be used in accordance with the shape of an object.

Information stored in the memory unit 201 is stored in, for example, a DVD-ROM beforehand, and the CPU 101 reads out such information from the DVD-ROM loaded in the DVD-ROM drive 108 and temporarily stores such information in the RAM 103. Alternatively, the CPU 101 may read out these pieces of information stored in the external memory 106, and temporarily store such information in the RAM 103. Note that the CPU 101 can update such temporarily stored information as needed in accordance with, for example, the progress of the game. In this manner, the CPU 101, the RAM 103, the DVD-ROM drive 108 and the like work together to function as the memory unit 201.

The selecting unit 202 selects a covering polygon which satisfies a precondition for display as a projecting polygon among the plurality of covering polygons. The precondition for display will be explained in detail later in the explanation for an operating process of the image processing device. The selecting unit 202 selects a projecting polygon based on a shape, a position and a direction of a planar body and those of the covering polygon. The CPU 101 and the RAM 103 work together to function as the selecting unit 202. Note that successive processes executed to select a projecting polygon can be realized using a graphics library or an image-processing calculation function provided by an exclusive hardware, so that the development period of the game can be reduced, and the processing speed of displaying a shadow can be enhanced.

The generating unit 203 projects each object in the virtual three-dimensional space from the viewpoint onto a projection plane based on a position of an object and a direction thereof both stored in the memory unit 201, a position of the viewpoint, a position of the projection plane and a direction thereof, and generates image data to be displayed on a display device like a monitor. Moreover, as a projecting polygon with respect to the object selected by the selecting unit 202 is displayed, a shadow of the object is generated on a planar body. In the present embodiment, for example, a one-point perspective projection technique is used for a perspective projection. The CPU 101, the RAM 103, and the image processing unit 107 work together to function as the generating unit 203.

### <Operation of Image Processing Device>

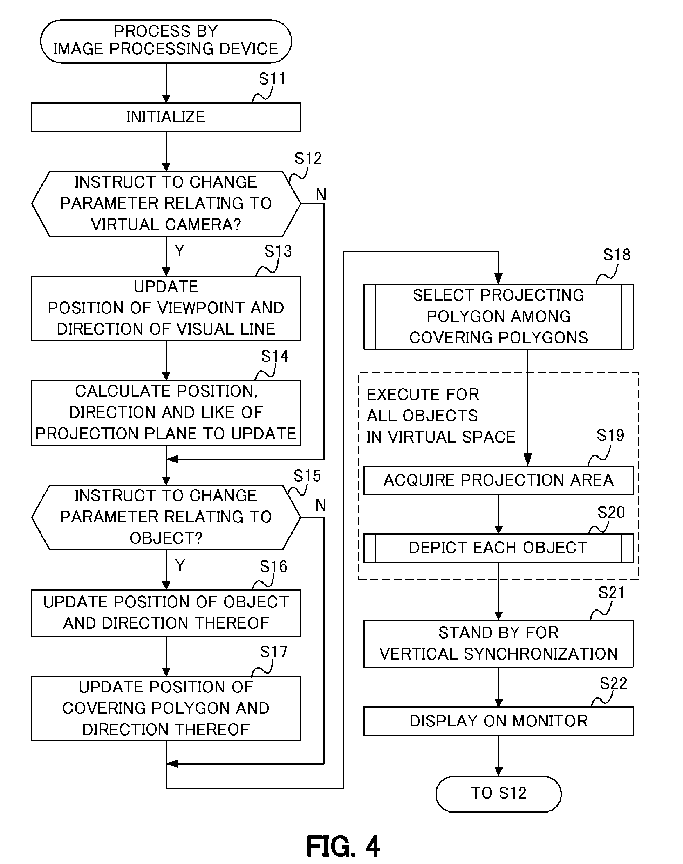

An explanation will be given of an operation of the image processing device 200 having the above-explained configuration with reference to FIG. 4. Note that in the present embodiment, a game character moves along a wide surface, e.g., a floor or a wall, and a shadow of the game character moving at a fast speed is displayed on such planar bodies as the floor and the wall. Typically, because the moving range of the game character is limited, a case in which the game character approaches to an end of a planar body and partially protrudes from the planar body is out of consideration.
Note that the present invention can be also applied to a case in which a character can move to an end of a planar body. In this case, a shadow is projected in a different form from a practical form, but because it will be a rare case that the character remains at the end for a long time, it is expected that a user hardly has a feeling of strangeness.

When the image processing device is powered on to start a process, necessary information (e.g., a position of a virtual camera and a direction thereof, a shape, a position, and a direction of an object) is read into the RAM 103, and the memory unit 201 is initialized (step S11).

At this time, the user can give an instruction through the controller 105 to change parameters, such as a position of the virtual camera (a viewpoint), a direction (a visual line) of the virtual camera, an image-pickup magnification ratio (a zoom ratio) of the virtual camera, and in addition to those, a position of the object and a direction thereof, and the movement of the object.

The CPU 101 determines whether or not the user has given an instruction input of changing the parameters relating to the virtual camera (step S12). When an instruction input has been given (step S12; Y), the CPU 101 updates a position of the virtual camera and a direction thereof in the memory unit 201 in accordance with the instruction (step S13). Moreover, the CPU 101 calculates a position and a direction that a projection plane onto which a virtual space viewed from the viewpoint toward a visual direction is projected is arranged in the virtual space in accordance with an updated position, direction and zoom ratio of the virtual camera (step S14).

That is, the CPU 101 calculates a direction perpendicular to a visual line vector (a vector represents a direction of the visual line) having the viewpoint as a starting point, and sets such direction as a direction of the projection plane. In other words, the visual line vector passes all the way through a center of the projection plane, and matches a normal vector thereof. At the time of zooming in, the projection plane is moved parallel so as to come closer to an image-pickup target (so as to move away from the viewpoint) in the three-dimensional space, and at the time of zooming out, the projection plane is moved parallel so as to move away from the image-pickup target (so as to come closer to the viewpoint). When a direction of the visual line vector is changed (i.e., the virtual camera is panned), a direction of the projection plane is also changed in accordance with a direction of the visual line vector.
Note that when there is no instruction input of changing the parameters relating to the virtual camera from the user (step S12; N), the process progresses to a step S15.

Next, the CPU 101 determines whether or not the user has given an instruction input with regard to a position of the object and a direction thereof (step S15). When the instruction input has been given (step S15; Y), the CPU 101 moves parallel or rotates the object in the three-dimensional space based on the instruction input, and updates a position of the object and a direction thereof both stored in the memory unit 201 (step S16). When a covering polygon associated with the object is present, a position of the covering polygon and a direction thereof are also calculated correspondingly to the instruction input with respect to the movement of the object as the covering polygon is fixed to the object (step S17). When there is no instruction input (step S15; N), the process progresses to a step S18.

Note that the parameters relating to a position and a direction of the virtual camera, an image-pickup magnification ratio thereof, and a position and a direction of the object may be given from a control program or the like. Alternatively, the parameters may be changed to predetermined values in association with a passage of time, or may be changed at random.

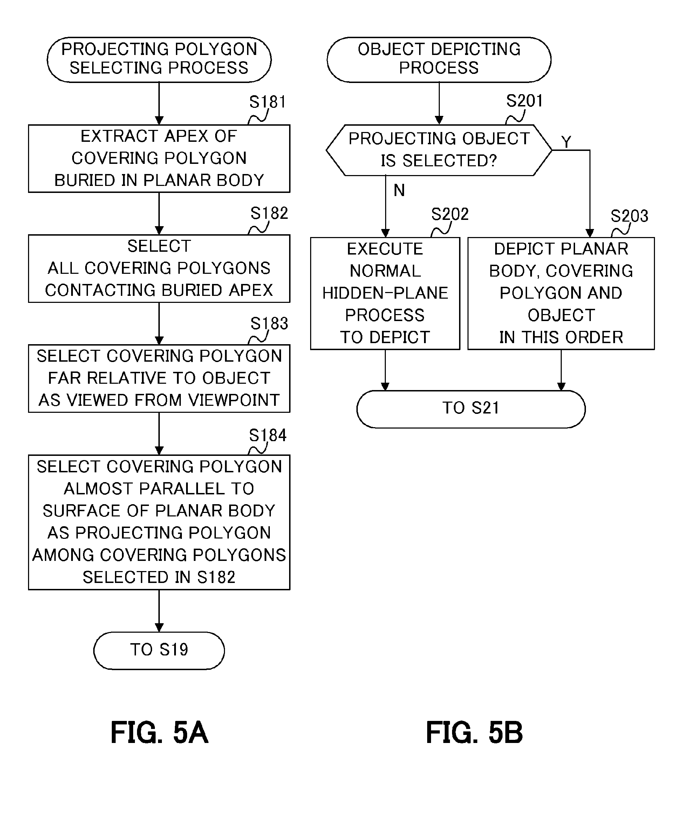

Next, for each of objects subjected to shadow displaying, the selecting unit 202 selects a projecting polygon to be displayed as a shadow among multiple covering polygons covering the object (step S18). An explanation will be given of a process that the selecting unit 202 selects a projecting polygon with reference to FIG. 5A.

First, the selecting unit 202 extracts an apex buried in a planar body among apexes of the covering polygons which cover the object (step S181). Whether or not an apex of a covering polygon is buried in the planar body is determined by comparing a direction of a vector perpendicular to a surface of the planar body running from the apex toward a surface configuring the planar body with that of the normal vector of the planar body. When both vectors are directed to the same direction, the apex is buried in the planar body. When both vectors are directed oppositely, the apex is not buried in the planar body.

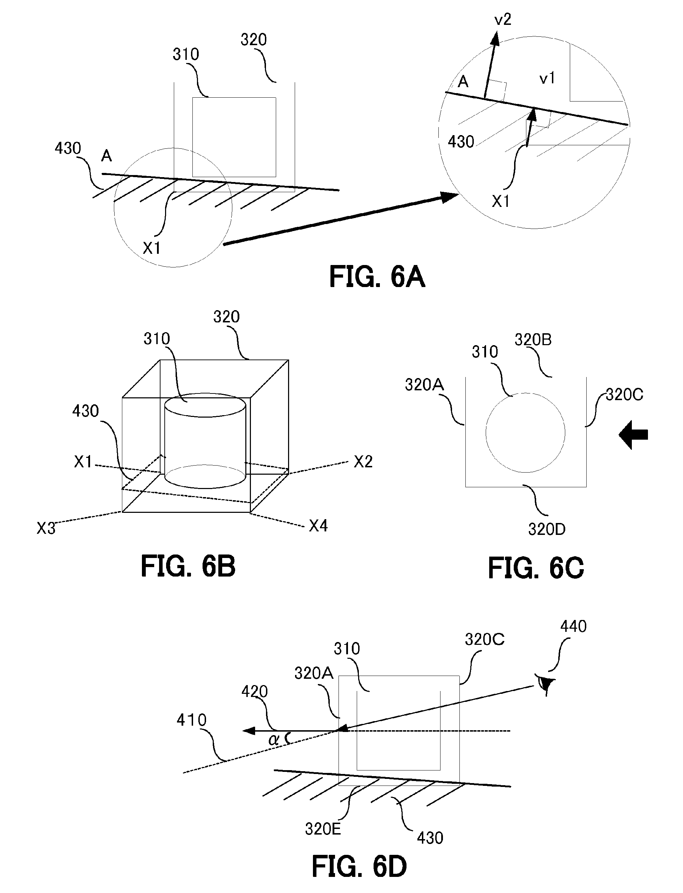

For example, FIG. 6A is a diagram showing the way the object 310 and the covering polygon 320 both shown in FIG.3 are viewed from a side (i.e., the same diagram as FIG. 3C). At this time, as shown in FIG. 6A, it is assumed that the covering polygon is arranged so as to be buried in a surface A of a planar body 430. For example, in order to determine whether or not an apex X1 in FIG. 6A is buried in the planar body 430, a direction of a vector v1 running from the apex X1 perpendicular to the surface A and that of a normal vector v2 relative to the surface A are compared with each other. In FIG. 6A, because both vectors are directed to the same direction, it is determined that the apex X1 is buried in the planar body 430. This process is performed on all apexes to extract a buried apex.

When it is determined that an apex of a covering polygon is buried in the planar body, it can be determined that at least three covering polygons abutting the apex are in contact (i.e., intersecting or being included) with the planer body. The selecting unit 202 selects all covering polygons contacting the apex extracted in the step S181 as candidates of a projecting polygon (step S182).

FIG. 6B is a diagram showing the object 310 in FIG. 6A as viewed from an obliquely upward direction. As shown in FIG. 6B, it is determined that apexes buried in the planar body are X1, X2, X3, and X4. As shown in FIG. 6C that is a diagram showing the object 130 in FIG. 6A as viewed from the above, covering polygons 320A, 320B, 320C and 320D abutting the apexes X1, X2, X3 and X4, and a polygon 320E configuring a bottom face are selected as covering polygons in contact with the planar body.

Next, the selecting unit 202 selects a covering polygon which is positioned apart relative to the object as viewed from the viewpoint in a direction of the visual line among the covering polygons selected in the step S182 (step S183). A polygon far from the viewpoint relative to the object can be selected by, for example, performing a following process on each of the covering polygons.

That is, with respect to each covering polygon selected in the step S182, an angle between a normal vector (an externally-directed normal vector of a surface of a covering polygon) and a directional vector (alternatively, a visual line vector) interconnecting between the viewpoint and a representative point of the covering polygon (e.g., a point of gravity) is calculated by, for example, acquiring an inner product, and if the angle is within 90 degrees, it is assumed that the covering polygon is far relative to the object. In a case of the present embodiment, as a covering polygon is arranged so as to cover a corresponding object, it becomes clear that a covering polygon directed toward a direction close to a directional vector interconnecting between the viewpoint and a representative point of the covering polygon is present behind the object as viewed from the viewpoint.
In addition, when a distance between the viewpoint and a representative point (e.g., a point of gravity) of the object is shorter than a distance between the viewpoint and a representative point (e.g., a point of gravity) of the covering polygon, it can be assumed that the covering polygon is present behind the object as viewed from the viewpoint.

For example, an explanation will be given of, as shown in FIG. 6D, an example case in which the object 310 is viewed from a direction of the viewpoint 440 (i.e., in FIG. 6C, a case in which the object 310 is viewed from an obliquely upward direction toward a direction of an arrow). At this time, for example, because an angle α between a normal vector 420 of the covering polygon 320A and a directional vector 410 passing from the viewpoint through a representative point of the covering polygon is within 90 degrees, the selecting unit 202 determines that the covering polygon 320A is present behind the object 310. Likewise, it is also determined that, except the covering polygon 320C, the covering polygon 320E arranged at the bottom face, the covering polygon 320D (a covering polygon which is directed toward a direction of a reader in FIG. 6D), and the covering polygon 320B arranged so as to face the covering polygon 320D are arranged behind the object 310.

Next, for each of the covering polygons selected in this fashion, the selecting unit 202 selects a covering polygon having an inclination closest to a surface of the planar body as a projecting polygon (step S184). Selection of a projecting polygon is made using, for example the normal vector of the covering polygon calculated in the step S183.

That is, for each covering polygon selected in the step S182, a vector directed opposite to the normal vector of a covering polygon and the normal vector of the planar body are compared with each other. Thereafter, a covering polygon having both vectors directed closest to each other (i.e., having an inner product closest to 1) is selected. In FIG. 6D, among the covering polygons 320A, 320B, 320D and 320E, it is determined that the covering polygon 320E has an inclination closest to the surface of the planar body 430.

Note that, when plural covering polygons having inclinations closest to the surface of the planar body are acquired, either one of which may be selected, or both of which may be adopted as projecting polygons.

The above-explained steps from S181 to S184 are executed for all objects subjected to shadow displaying to select a projecting polygon. A selected projecting polygon is stored in association with a corresponding object in the RAM 103 of the image processing device 200.

Next, the generating unit 203 executes following steps from S19 to S20 on all objects in the virtual space, and all of the selected projecting polygons to display a two-dimensional image of the virtual space.
First, the generating unit 203 acquires a projection area of an object and that of a selected projecting polygon (step S19). In the present embodiment, as explained above, as a one-point perspective technique is used for perspective projection of each object onto a projection plane, an object far from the viewpoint is projected smaller, and an object near the viewpoint is projected larger. However, instead of the one-point perspective technique, a parallel projection technique can be used.

When a destination where the object is projected is acquired, an area of a texture corresponding to the object is affixed to (mapped onto) each corresponding area (in a case of the projecting polygon, transparency information is affixed to a projection destination) to display the object (step S20). FIG. 5B is a flowchart showing a process of the step S20 in detail.

First, the generating unit 203 refers to the RAM 103 or the like of the image processing device 200 and determines whether or not a projecting polygon is selected with respect to a currently-focused object (step S201). To an object having no projecting polygon selected (step S201; N), the generating unit 203 adopts, for example, Z-buffering in order to execute a hidden-plane process (step S202). That is, for each pixel configuring image data to be displayed, the generating unit 203 paints a pixel with a color of texture information (or transparency information) corresponding to a polygon closest to the viewpoint (a projection plane).

At this time, for example, in FIG. 6D, the projecting polygon 320E is arranged behind the planar body 430 as viewed from the viewpoint. Accordingly, if the foregoing hidden-plane process is executed, the projecting polygon 320B is completely hidden by the object 310. Alternatively, when the projecting polygon is arranged with a portion thereof "sinking into" the planar body, the "sinking" portion is hidden by the planar body.

In order to avoid such problems, with respect to an object having a projecting polygon selected (step S201; Y), the generating unit 203 first displays the planar body viewed from the viewpoint toward a direction of the visual line, next, displays the projecting polygon viewed from the viewpoint in the direction of the visual line. Finally, the generating unit 203 displays the object viewed from the viewpoint in the direction of the visual line (step S203). Accordingly, the planar body, the projecting polygon and the object are displayed always in this order, thereby preventing the projecting polygon from being hidden by the planar body.

When completing the above-explained image generating process, the generating unit 203 stands by until a vertical synchronization interruption occurs (step S21). While the generating unit 203 stands by, other processes (e.g., a process of updating a position and a direction of each object, and those of the virtual camera stored in the RAM 103 based on a passage of time or a process from the user) may be executed in a co-routine manner.

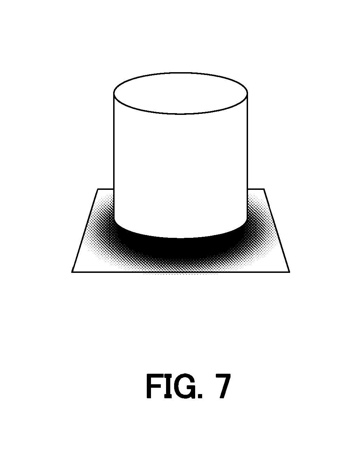

When the vertical synchronization interruption occurs, the generating unit 203 transfers contents of the displayed image data (in general, stored in a frame buffer) to a monitor (not illustrated) to display an image (step S22), and returns the process to the step S12. For example, with respect to the object shown in FIG. 6D, only the covering polygon at the bottom face is displayed as a projecting polygon, and when the object is viewed from a direction of the viewpoint, a shadow as shown in FIG. 7 is acquired. That is, as the center part of the transparency information is opaque, a shadow-like expression is realized. Regarding a part which gradually becomes transparent toward the exterior, a planar body which has been displayed before the covering polygon is displayed. Note that an outer circumference of the projecting polygon is not displayed in practice. In this diagram, a square that is the outer circumference of the projecting polygon is clearly displayed so as to facilitate understanding.

### <Second Embodiment>

In the first embodiment, in consideration of the case in which the covering polygon may be arranged with a portion thereof "sinking into" the planar body, with the virtual space being viewed from the viewpoint in a direction of the visual line, the generating unit 203 displays the planar body, the covering polygon and the object in this order so that the covering polygon is always displayed without being hidden by the planar body. In a second embodiment, the generating unit 203 changes a position of a covering polygon so as to be displayed along a planar body. Note that, as the configuration of an image processing device of the second embodiment is same as that of the image processing device 200 shown in FIG. 2, the duplicated explanation thereof will be omitted.

### <Operation of Image Processing Device>

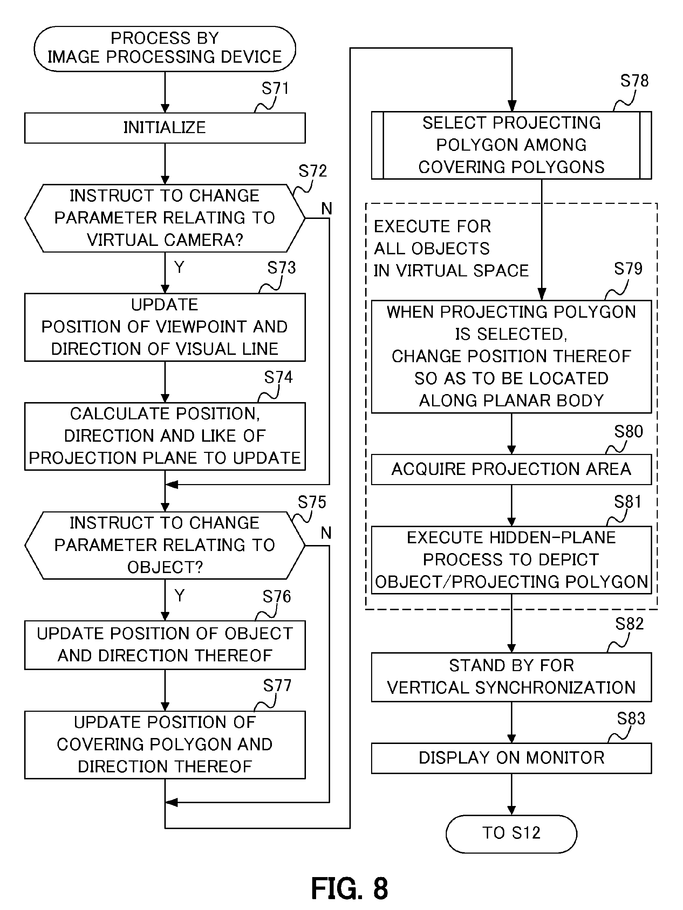

FIG. 8 shows a flow of a process of the present embodiment. The image processing device 200 executes the same process as that of the steps from S11 to S18, from S21 to S22 shown in FIG. 4 (steps from S71 to 78, S82 and S83). In the present embodiment, the generating unit 203 of the image processing device 200 further executes a step S79 to move a covering polygon selected as a projecting polygon along a planar body.

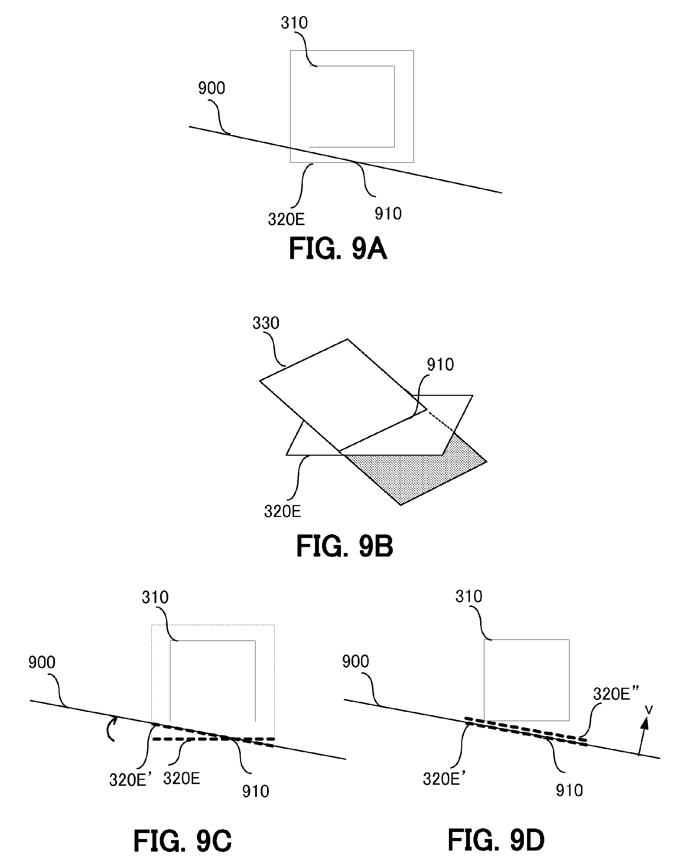

An explanation will be given of how to move a covering polygon along a planar body with reference to FIG. 9. FIG. 9A is a diagram showing, like FIG. 6A, the way the object 310 and the multiple covering polygons 320 corresponding to the object 310 are viewed from a side. Among the covering polygons 320, the covering polygon 320E at the bottom part is selected as a projecting polygon. A planar body 900 intersects with the covering polygon 320E on a line 910. FIG. 9B shows the way a part where the covering polygon 320E and the planar body 900 intersect with each other is viewed from an inclined direction.

As shown in FIG. 9B, a planar surface including the projecting polygon 320E and a surface of the planar body 900 intersect with each other on the line 910. The generating unit 203 first rotates the projecting polygon 320E relative to the line 910 intersecting with the planar body 900 so as to make the projecting polygon parallel to the surface of the planar body 900. FIG. 9C shows a projecting polygon 320E' acquired by rotating the projecting polygon 320E relative to the line 910 toward a direction of an arrow so as to make the projecting polygon parallel to the planar body 900.

Finally, as shown in FIG. 9D, the projecting polygon is moved parallel by only a predetermined distance (a distance that the projecting polygon does not collide with the corresponding object 310) along the direction of a normal vector v of the surface of the planar body 900 (320 E" stands for the projecting polygon after being moved). This allows the projecting polygon to be always displayed, even if the planar body, the covering polygon and the object are not displayed in this order as viewed from the viewpoint in a direction of the visual line like the first embodiment. That is, because the projecting polygon is arranged closer relative to the planar body as viewed from the viewpoint, by acquiring an area where the object is projected and that of the covering polygon (step S80), and by affixing a texture or transparency information corresponding to the respective projection areas to display the object and the covering polygon by executing the hidden-plane process like Z-buffering (step S81), the covering polygon is displayed without being hidden by the planar body.

Note that even if the projecting polygon is completely included in the planar body as shown in FIG. 6A, when there is a line that a planar surface including the projecting polygon and a planar surface including the planar body intersect with each other with these planar surfaces being extended, it is appropriate if the projecting polygon is rotated relative to such a line. On the other hand, when the planar surface including the projecting polygon and the planar surface including the planar body are completely parallel to each other, the generating unit 203 does not rotate the projecting polygon, but moves the projecting polygon parallel along the direction of the normal vector of the surface of the planar body by only a predetermined distance (a distance that the projecting polygon does not collide with the corresponding object).

Although the explanations have been given of the embodiments of the present invention, the process executed to select a projecting polygon in the present invention can be realized using a graphics library or an image-processing calculation function provided by an exclusive hardware, so that the development period of the game can be reduced, and the processing speed of displaying a shadow can be enhanced. Note that in the foregoing embodiments, the explanations have been given of the case in which the planar body is present at the bottom part of the object only, but the present invention is also effective when the planar body is present at a side or at the top thereof. Moreover, when multiple planar bodies, such as a floor and a wall, are present at the corner of a room or the like, the embodiments of the present invention can be applied to each planar body.

The present invention is not limited to the above-explained embodiments, and can be changed and modified in various forms. Moreover, each structural element of the embodiments can be freely combined together.

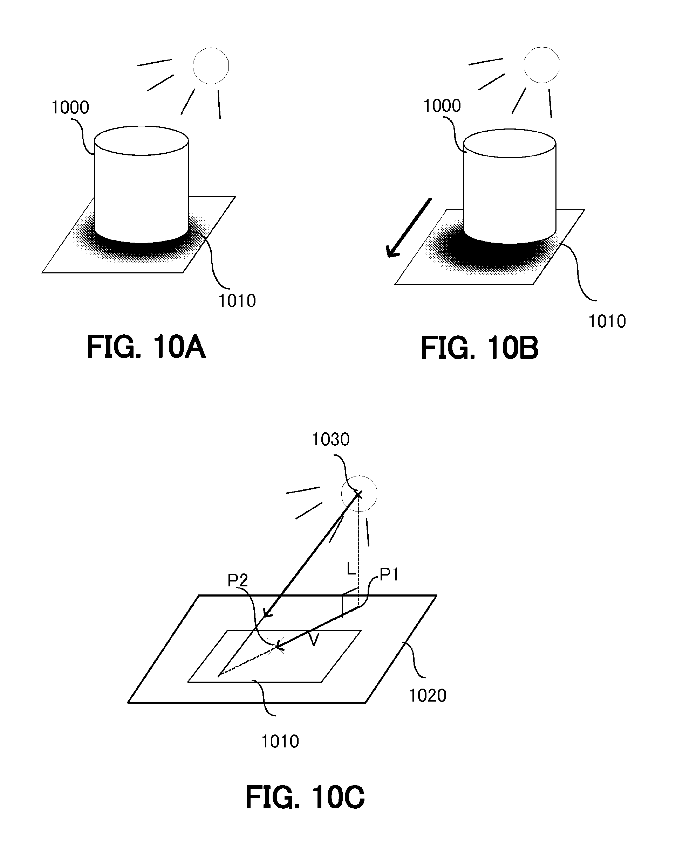

For example, in the foregoing embodiments, when a shadow is generated, no light source is in consideration. However, a projecting polygon may be moved so as to move away from a light source in consideration of a position of the light source. That is, a projecting polygon 1010 corresponding to an object 1000 in FIG. 10A may be moved so as to move away from a light source as shown in FIG. 10B.

In this case, for example, a position of the light source and a direction thereof are stored in the memory unit 201, and after the step S18 in FIG. 4, or after a position of the projecting polygon is set in the step S79 in FIG. 8, the projecting polygon is further moved as follows based the position of the light source and the direction thereof. That is, as shown in FIG. 10C, the projecting polygon can be moved parallel by only a predetermined distance along a directional vector V interconnecting between a point P1 where a planar surface 1020 including the projecting polygon 1010 and a line L extending from a light source 1030 to the planar surface 1020 intersect perpendicularly, and a representative point P2 (e.g., a point of gravity) of the projecting polygon.

Moreover, in the foregoing embodiments, the projecting polygon is used for displaying a shadow, but can be used for other applications. For example, it is possible to express as if reflection or mirroring of an object is present on a surface of a planar body. For example, a mirror image of an object viewed from the position of a covering polygon is affixed to a shadow part of transparency information corresponding to the covering polygon. Next, when a projecting polygon is displayed through the procedures explained in the foregoing embodiments, the mirror image of the object is displayed on a planar body located near the object, thereby attaining an expression as if the planar body is reflecting.

Alternatively, it is also possible to express as if the object dully shines with a predetermined color by allowing the shadow part of the transparency information corresponding to the covering polygon to have the predetermined color.

Moreover, in the foregoing embodiments, a covering polygon satisfying the preconditions is selected as a projecting polygon. However, for example, in the selecting process of a projecting polygon shown in FIG. 5, the step S184 may be omitted, and all of the multiple covering polygons satisfying the conditions up to the step S1883 may be selected as projecting polygons. Alternatively, in the step S182, only a covering polygon intersecting with the surface of the planar body may be selected, and a covering polygon which is completely included in the planar body may be out of the selection target.

For example, with respect to the object, the covering polygon and the planar body shown in FIG. 6, when the selecting process of a projecting polygon excluding the step S184 is applied, the covering polygons 320A, 320B, 320D, and the covering polygon 320E arranged at the bottom face are selected as projecting polygons. The selected projecting polygons may be displayed as those are. Alternatively, the second embodiment may be applied to move such selected projecting polygons along the planar body and to display those. This enables displaying of multiple shadows as if such shadows are displayed using, for example, a radiosity technique.

Note that, as the shape of a planar body, not only a planar surface but also a curved surface like a spherical surface can be used. In this case, a planar surface contacting a curved surface in the vicinity of an object is taken into consideration, and that planar surface is applied as a shape of a "planar body" in the above-explained present invention. For example, when the curved surface is a spherical surface, it is possible to acquire a "tangent planar surface" which is perpendicular to a line interconnecting between the center of the tangent planar surface and a center of gravity of the object and which is in contact with the spherical surface.

This application claims the benefit of Japanese Patent Application No. 2008-004260, the entire disclosure of which is herein incorporated by reference.

## Claims

1. An image processing device (200) which generates an image representing an object and a planar body arranged in a virtual space, and a figure of the object projected onto the planar body, the image processing device (200) comprising:
a memory unit (201) which stores a position of a viewpoint arranged in the virtual space and a direction of a visual line, a shape, a position and a direction of the object and the planar body arranged in the virtual space, and respective shapes, positions and directions of multiple covering polygons arranged so as to cover the object;
a selecting unit (202) which selects a covering polygon satisfying a precondition for display as a projecting polygon among the multiple covering polygons; and
a generating unit (203) which generates an image of the virtual space as viewed from the viewpoint in the direction of the visual line based on the shape, the position and the direction of the object and the shape, the position, and the direction of the body, the position of the viewpoint and the direction of the visual line, and a shape, a position and a direction of the projecting polygon,
wherein when a covering polygon and the planar body are arranged so as to contact each other, the covering polygon satisfies the precondition for display.

2. The image processing device (200) according to claim 1, wherein the generating unit (203) displays the planar body as viewed from the viewpoint in the direction of the visual line based on the shape, the position, and the direction of the object and the shape, the position, and the direction of the planar body, the position of the viewpoint and the direction of the visual line, and the shape, the position and the direction of the projecting polygon, displays the projecting polygon as viewed from the viewpoint in the direction of the visual line, and displays the object as viewed from the viewpoint in the direction of the visual line, thereby generating an image of the virtual space as viewed from the viewpoint in the direction of the visual line.

3. The image processing device (200) according to claim 1, wherein when a covering polygon and the planar body are arranged so that such a covering polygon is included in the planar body, such a covering polygon satisfies the precondition for display.

4. The image processing device (200) according to claim 3, wherein only a covering polygon having the smallest inclination relative to a surface of the planer body satisfies the precondition for display among multiple covering polygons, each of which is arranged in contact with the planar body, or is arranged so as to be included in the planar body.

5. The image processing device (200) according to claim 1, wherein
the memory unit (201) further stores a position of a light source, and
the generating unit (203) moves the projecting polygon by only a predetermined distance so that the projecting polygon moves away from the light source, and displays the object under a condition that the object and the planar body are illuminated by the light source.

6. The image processing device (200) according to claim 5, wherein when there is a line of intersection that a planar surface including the projecting polygon intersects with a planar surface including a surface of the planar body, the generating unit (203) rotates the projecting polygon around the line of intersection, and when there is no line of intersection, the generating unit moves the projecting polygon along respective normal lines of both planar surfaces and arranges the projecting polygon on the surface of the planar body, thereby displaying the projecting polygon.

7. The image processing device (200) according to claim 1, wherein when a projecting polygon is closer to the viewpoint than the object, the covering polygon does not satisfy the precondition for display regardless of an arrangement relative to the planar body.

8. An image processing method of generating an image representing an object and a planar body arranged in a virtual space, and a figure of the object projected onto the planar body, the image processing method being executed by an image processing device (200) comprising a memory unit (201), a selecting unit (202), and a generating unit (203), and wherein
the memory unit (201) stores a position of a viewpoint arranged in the virtual space and a direction of a visual line, a shape, a position and a direction of the object and the planar body arranged in the virtual space, and respective shapes, positions and directions of multiple covering polygons arranged so as to cover the object, and the image processing method comprises:
a selecting step in which the selecting unit (202) selects a covering polygon satisfying a precondition for display as a projecting polygon among the multiple covering polygons; and
a generating step in which the generating unit (203) generates an image of the virtual space as viewed from the viewpoint in the direction of the visual line based on the shape, the position and the direction of the object and the shape, the position, and the direction of the planar body, the position of the viewpoint and the direction of the visual line, and a shape, a position and a direction of the projecting polygon, and
when a covering polygon and the planar body are arranged so as to contact each other, the covering polygon satisfies the precondition for display.

9. An information recording medium recording a program which allows a computer to function as an image processing device (200) which generates an image representing an object and a planar body arranged in a virtual space, and a figure of the object projected onto the planar body, wherein the program allows the computer to function as:
a memory unit (201) which stores a position of a viewpoint arranged in the virtual space and a direction of a visual line, a shape, a position and a direction of the object and the planar body arranged in the virtual space, and respective shapes, positions, and directions of multiple covering polygons arranged so as to cover the object;
a selecting unit (202) which selects a covering polygon satisfying a precondition for display as a projecting polygon among the multiple covering polygons; and
a generating unit (203) which generates an image of the virtual space viewed from the viewpoint in the direction of the visual line based on the shape, the position and the direction of the object and the shape, the position, and the direction of the planar body, the position of the viewpoint and the direction of the visual line, and a shape, a position and a direction of the projecting polygon, and
when a covering polygon and the planar body are arranged so as to contact each other, the covering polygon satisfies the precondition for display.

10. A program allowing a computer to function as an image processing device (200) which generates an image representing an object and a planar body arranged in a virtual space, and a figure of the object projected onto the planar body, wherein the program allows the computer to function as:
a memory unit (201) which stores a position of a viewpoint arranged in the virtual space and a direction of a visual line, a shape, a position and a direction of the object and the planar body arranged in the virtual space, and respective shapes, positions, and directions of multiple covering polygons arranged so as to cover the object;
a selecting unit (202) which selects a covering polygon satisfying a precondition for display as a projecting polygon among the multiple covering polygons; and
a generating unit (203) which generates an image of the virtual space viewed from the viewpoint in the direction of the visual line based on the shape, the position and the direction of the object and the shape, the position and the direction of the planar body, the position of the viewpoint and the direction of the visual line, and a shape, a position and a direction of the projecting polygon, and
when a covering polygon and the planar body are arranged so as to contact each other, the covering polygon satisfies the precondition for display.
